# EUROPEAN PATENT APPLICATION

(11) **EP 2 439 494 A2**
(43) Date of publication of application: **11.04.2012**
(21) Application number: 11178973.1
(22) Date of filing: 26.08.2011
(51) Int. Cl.: G01C 21/34

(54) **Route related information providing apparatus, method for providing route related information, computer-readable storage medium, and route guidance system**

(30) Priority: 08.10.2010 JP 2010228400
(71) Applicant: AISIN AW CO., LTD., Anjo-shi, Aichi 444-1192 (JP)
(72) Inventor: Miura, Naoki, Anjo-shi,, Aichi 444-1192 (JP); Nonomura, Junichi, Anjo-shi,, Aichi 444-1192 (JP)
(74) Representative: TBK

(57) **Abstract**

A route related information providing apparatus comprises a fuel efficiency information obtaining unit obtaining, for a plurality of zones, a plurality of fuel efficiency information indicative of a zone associated with a fuel efficiency, a first route related information providing unit providing information related to a first route searched for according to a first route search method, according to which a zone with a smaller deviation of the fuel efficiency indicated in the fuel efficiency information has a greater tendency to be used as a configuration zone of the first route, and a second route related information providing unit providing information related to a second route searched for according to a second route search method, according to which a zone with a larger deviation of the fuel efficiency indicated in the fuel efficiency information has a greater tendency to be used as a configuration zone of the second route.

## Description

### INCORPORATION BY REFERENCE

The disclosure of Japanese Patent Application No. 2010-228400 filed on October 8, 2010, including the specification, drawings and abstract is incorporated herein by reference in its entirety.

### BACKGROUND OF THE INVENTION

### 1. Field of the Invention

The invention relates to a route related information providing apparatus, a method for providing route related information, a computer-readable storage medium, and a route guidance system.

### 2. Description of the Related Art

Japanese Patent Application Publication No. 2010-107459 (JP-A-2010-107459), for example, proposes a car navigation system that searches for a route that will be fuel efficient for a vehicle has been proposed. This car navigation system estimates the fuel efficiency taking into account the vehicle driving pattern and the type of vehicle, and is thus able to search for a fuel efficient route more accurately than when the vehicle driving pattern and the type of vehicle are not taken into account.

### SUMMARY OF INVENTION

However, when searing for a route without taking into account extent to which fuel efficiency relies on driving performance, as is the case with JP-A-2010-107459, a route that does not correspond to what the driver has in mind with respect to driving performance for fuel saving driving may be provided. In this case, the extent to which fuel efficiency relies on driving performance differs depending on the route. For example, the fuel efficiency on a hilly road or a road with many curves relies much more on the driving performance of the driver than the fuel efficiency on a flat straight road. When traveling a route in which the fuel efficiency relies greatly on driving performance, the fuel efficiency may be good or bad depending on the driving performance of the driver. With such a route, good fuel efficiency can only be obtained by paying attention to driving performance, so this kind of route is suited toward a driver that wishes to feel a sense of achievement when good fuel efficiency is obtained as a result of paying attention to driving performance. On the other hand, when traveling a route in which fuel efficiency relies little on driving performance, it is very possible that stable fuel efficiency will be obtained without relying on the driving performance of the driver. In this case, stable fuel efficiency can be obtained without driver paying attention to driving performance, so this kind of route is suited toward a driver that wishes to just drive without paying attention to driving performance.

The present invention provides a route related information providing apparatus, a method for providing route related information, a computer-readable storage medium, and a route guidance system, capable of providing information related to routes that rely to different extents on driving performance for fuel saving driving.

A first aspect of the present invention relates to a route related information providing apparatus including: a fuel efficiency information obtaining unit that obtains a plurality of fuel efficiency information indicative of a zone associated with a fuel efficiency if a vehicle were to travel the zone, for each of a plurality of zones; a first route related information providing unit that provides information related to a first route searched for according to a first route search method, wherein the first route search method is a method according to which a zone with a smaller deviation of the fuel efficiency indicated in the fuel efficiency information has a greater tendency to be used as a configuration zone of the first route; and a second route related information providing unit that provides information related to a second route searched for according to a second route search method, wherein the second route search method is a method according to which a zone with a larger deviation of the fuel efficiency indicated in the fuel efficiency information has a greater tendency to be used as a configuration zone of the second route.

According to the first aspect, the first route related information providing unit provides information related to a first route searched for according to a first route search method in which a zone with a smaller deviation of the fuel efficiency indicated in the fuel efficiency information has a greater tendency to be used as a configuration zone. As a result, information related to the first route in which fuel efficiency relies little on the driving performance of the driver can be provided to the driver. Therefore, for example, a driver that wishes to simply drive without paying attention to driving performance for fuel saving driving can select the first route in which fuel efficiency relies little on the driving performance of the driver. Also, according to the first aspect described above, the second route related information providing unit provides information related to a second route searched for according to a second route search method in which a zone with a larger deviation of the fuel efficiency indicated in the fuel efficiency information has a greater tendency to be used as a configuration zone. As a result, information related to the second route in which fuel efficiency relies greatly on the driving performance of the driver can be provided to the driver. Therefore, for example, a driver that wishes to feel a sense of achievement when good fuel efficiency is obtained as a result of paying attention to driving performance can select the second route in which fuel efficiency relies greatly on the driving performance of the driver.

A second aspect of the present invention relates to a method for providing route related information, including: obtaining a plurality of fuel efficiency information indicative of a zone associated with a fuel efficiency if a vehicle were to travel the zone, for each of a plurality of zones; and providing at least one of information related to a first route searched for according to a first route search method, and information related to a second route searched for according to a second route search method, wherein the first route search method is a method according to which a zone with a smaller deviation of the fuel efficiency indicated in the fuel efficiency information has a greater tendency to be used as a configuration zone of the first route, and the second route search method is a method according to which a zone with a larger deviation of the fuel efficiency indicated in the fuel efficiency information has a greater tendency to be used as a configuration zone of the second route.

A third aspect of the present invention relates to a computer-readable storage medium that stores computer-executable instructions for performing a route related information providing function including: obtaining a plurality of fuel efficiency information indicative of a zone associated with a fuel efficiency if a vehicle were to travel the zone, for each of a plurality of zones; providing information related to a first route searched for according to a first route search method, wherein the first route search method is a method according to which a zone with a smaller deviation of the fuel efficiency indicated in the fuel efficiency information has a greater tendency to be used as a configuration zone of the first route; and providing information related to a second route searched for according to a second route search method, wherein the second route search method is a method according to which a zone with a larger deviation of the fuel efficiency indicated in the fuel efficiency information has greater tendency to be used as a configuration zone of the second route.

According to the second and third aspects, similar to the first aspect, it is possible to provide information related to routes that rely to different extents on driving performance for fuel saving driving.

A fourth aspect of the present invention relates to a route guidance system including: the route related information providing apparatus according to the first aspect; and a navigation device configured to communicate with the route related information providing apparatus, wherein the navigation device includes a route information obtaining unit that obtains information related to the first route and the second route from the route related information providing apparatus, a accepting unit that provides information related to the first route and the second route and accepts a selection of one of the first route and the second route, and a route guidance unit that performs route guidance for the selected first route or the second route.

According to the forth aspect, the navigation device obtains the information related to the first route and the second route from the route related information providing apparatus, and accepts a selection of one of the first route and the second route by providing this information. As a result, the driver is able to select the route according to how conscious he or she is about driving performance. Performing route guidance for the selected first route or second route enables the driver to drive the vehicle along the route according to how conscious he or she is about driving performance.

### BRIEF DESCRIPTION OF THE DRAWINGS

The features, advantages, and technical and industrial significance of this invention will be described below with reference to the accompanying drawings, in which like numerals denote like elements, and wherein:
FIG. 1 is a block diagram of a route guidance system;
FIGS. 2A and 2B are graphs showing a normal distribution curve in which a fuel efficiency histogram has been fitted; and
FIGS. 3A and 3B are flowcharts of a route guidance routine.

### DETAILED DESCRIPTION OF EMBODIMENTS

Hereinafter, example embodiments of the present invention will be described in the order given below.
(1) Structure of route guidance system:
   (1-1) Structure of navigation device:
   (1-2) Structure of server:
   (1-3) Route guidance routine:
(2) Other example embodiments:

### (1) Structure of route guidance system:

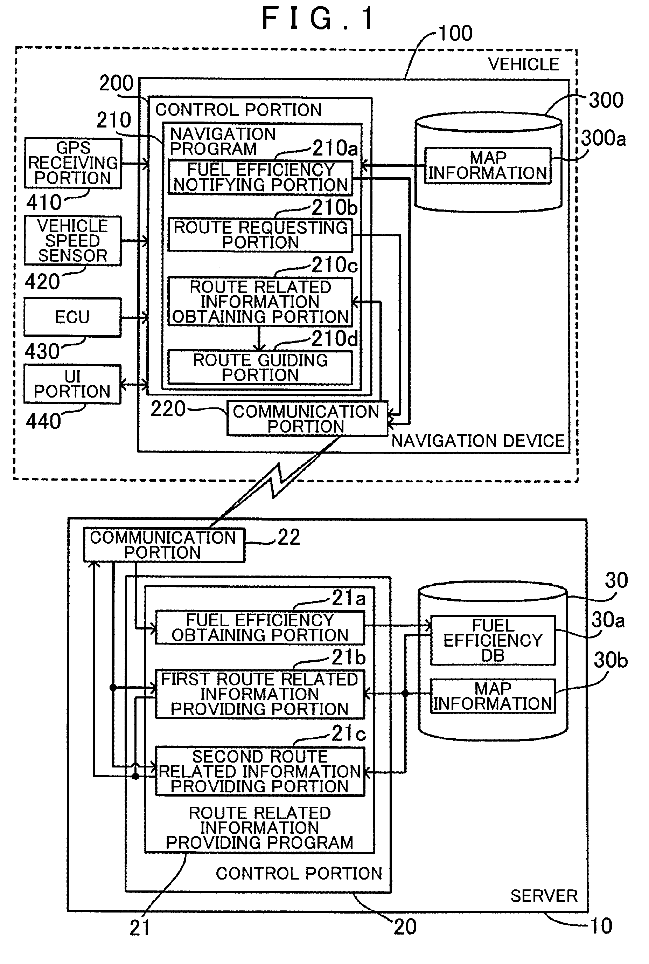

FIG. 1 is a block diagram of the structure of a route guidance system 1 that includes a server 10 as a route related information providing apparatus, and a navigation device 100 provided in a vehicle.

### (1-1) Structure of navigation device:

The navigation device 100 is provided in each of a plurality of vehicles that travel on a road. The navigation device 100 includes a control portion 200 that includes a CPU, RAM, and ROM, and the like, a communication portion 220, and a storage medium 300. The control portion 200 executes programs (computer-executable instructions) stored in the storage medium 300 and the ROM. The control portion 200 executes a navigation program 210 as one of the programs stored in the storage medium 300 and the ROM. The communication portion 220 is formed by a circuit for communicating with the server 10. The control portion 200 communicates with the server 10 via the communication portion 220. The storage medium 300 stores map information 300a. This map information 300a includes, for example, node data indicative of nodes specified on a road on which the vehicle travels, link data that includes information related to links that connect the nodes, and facility data indicative of facilities that may be destinations, and the like. A link in this example embodiment is one example of a zone.

The vehicle includes a GPS receiving portion 410, a vehicle speed sensor 420, an Engine Control Unit (ECU) 430, and a User Interface (UI) portion 440. The GPS receiving portion 410 receives radio waves from GPS satellites, and outputs a signal for calculating the current position of the vehicle to the control portion 200 via an interface, not shown. The vehicle speed sensor 420 outputs a signal indicative of the rotation speed of wheels provided on the vehicle to the control portion 200. The control portion 200 obtains the current position of the vehicle and the vehicle speed based on the output signals of the GPS receiving portion 410 and the vehicle speed sensor 420 and the like. The ECU 430 is a computer that controls the fuel injection quantity and the like of the engine. The control portion 200 obtains a signal indicative of the fuel injection quantity from the ECU 430. The UI portion 440 has a display portion that displays a UI image to the driver, and an operating portion that accepts operations from the driver.

The navigation program 210 includes a fuel efficiency notifying portion 210a, a route requesting portion 210b, a route related information obtaining portion 210c, and a route guiding portion 210d. Using the function of the fuel efficiency notifying portion 210a, the control portion 200 detects when the vehicle enters and exits a link, and calculates the fuel efficiency indicating the amount of fuel that would be consumed if the vehicle were to travel a unit distance of the link, by dividing a cumulative fuel injection quantity during the period from entrance to exit by the length of the link. The length of a link is the distance that the vehicle travels after entering a link until exiting the link, and is determined by the link data of the map information 300a. Using the function of the fuel efficiency notifying portion 210a, the control portion 200 transmits fuel efficiency information that associates the fuel efficiency of the vehicle with the link to the server 10.

Using the function of the route requesting portion 210b, the control portion 200 accepts a route search operation by the driver via the UI portion 440. A route type (that is separated into a first route and a second route) is selected and a destination is specified by the route search operation performed by the driver. Using the function of the route requesting portion 210b, the control portion 200 creates route request information indicative of the departure point, i.e., the current position of the vehicle that is obtained based on the output signal of the GPS receiving portion 410 and the like, the destination, and the route type, and then transmits this route request information to the server 10 via the communication portion 220. The first route and the second route are routes that are searched for according to a first route search method and a second route search method, to be described later, respectively.

The route related information obtaining portion 210c is a module that directs the control portion 200 to execute a function of obtaining information relating to one of the first route and the second route from the server 10. Using the function of the route related information obtaining portion 210c, the control portion 200 receives route information transmitted from the server 10. The route information is information transmitted back by the server 10 in response to the route request information, and is information related to the route searched for by the server 10 in response to the route request information. More specifically, the route information includes information specifying configuration links that are links that form a route from the departure point to the destination indicated in the route request information. The route guiding portion 210d is a module that directs the control portion 200 to execute a function of performing route guidance for the first route or the second route. That is, using the function of the route guiding portion 210d, the control portion 200 performs route guidance based on the route information, with the UI portion 440.

### (1-2) Structure of server:

The server 10 is provided in a control center that centrally controls various information transmitted from the navigation device 100 provided in each vehicle, for example. The server 10 includes a control portion 20 that includes a CPU, RAM, and ROM, and the like, a communication portion 22, and a storage medium 30. The control portion 20 executes programs (computer-executable instructions) stored in the storage medium 30 and the ROM. The control portion 20 executes a route related information providing program 21 as one of the programs stored in the storage medium 30 and the ROM. The communication portion 22 is formed by a circuit for communicating with the navigation device 100. The control portion 20 communicates with the navigation device 100 via the communication portion 22. The storage medium 30 stores a fuel efficiency Database (DB) 30a and map information 30b. This map information 30a includes the same data as the map information 300a stored in the storage medium 300 of the navigation device 100. Fuel efficiency information indicative of the fuel efficiency if the vehicle were to travel each link indicated in the link data of the map information 30b is accumulated in the fuel efficiency DB 30a.

The route related information providing program 21 includes a fuel efficiency obtaining portion 21a, a first route related information providing portion 21b, and a second route related information providing portion 21c. The fuel efficiency obtaining portion 21a is a module for directing the control portion 20 to execute a function of obtaining a plurality of fuel efficiency information indicative of a link associated with the fuel efficiency if the vehicle were to travel this link, for each of a plurality of links. As described above, using the function of the fuel efficiency notifying portion 210a, the navigation device 100 provided in each vehicle transmits fuel efficiency information indicating the fuel efficiency in a link each time the vehicle travels the link. Using the function of the fuel efficiency obtaining portion 21a, the control portion 20 receives the fuel efficiency information and accumulates it in the fuel efficiency DB 30a. Moreover, using the function of the fuel efficiency obtaining portion 21a, the control portion 20 calculates a statistical value of the fuel efficiency for each link by obtaining a plurality of fuel efficiency information accumulated in the fuel efficiency DB 30a at predetermined time cycles and performing statistical processing. In this case, as the statistical value of the fuel efficiency, a standard deviation σ, an average value Cₐᵥₑ, a best value Cₘᵢₙ as a lowest value, and a worst value Cₘₐₓ as a highest value, when it is assumed that the distribution of the fuel efficiency is normal distribution, are calculated and stored in the fuel efficiency DB 30a. Table 1 below shows an example of the fuel efficiency DB 30a.

**[Table 1]**

| Link | travel date | vehicle | Fuel efficiency [ml / km] | Standart deviation [ml / km] | Average value [ml / km] | Best value [ml / km] | worst value [ml / km] |
|---|---|---|---|---|---|---|---|
| L₁ | 2010/9/1 0 | V₁ | 30 | 7.4 | 33 | 25 | 46 |
| | 2010/9/1 2 | V₂ | 34 | | | | |
| | 2010/9/1 2 | V₃ | 28 | | | | |
| | 2010/9/1 5 | V₁ | 46 | | | | |
| | 2010/9/1 8 | V₄ | 35 | | | | |
| | 2010/10/ 3 | V₁ | 25 | | | | |
| L₂ | 2010/9/1 2 | V₃ | 44 | 11 | 42 | 37 | 52 |

As shown in Table 1 above, fuel efficiency information indicative of a link (L1, L2...) associated with the fuel efficiency if the vehicle were to travel this link is accumulated in the fuel efficiency DB 30a. A plurality of this fuel efficiency information is accumulated for each of a plurality of links. Also, in each fuel efficiency information, a vehicle (V1, V2...) that has traveled a link is associated with a travel date. That is, the fuel efficiency information includes pieces of information indicative of the link, the travel date, the vehicle and the fuel efficiency. Furthermore, the standard deviation σ, the average value Cave, the best value Cₘᵢₙ, and the worst value Cₘₐₓ of the fuel efficiency are stored for each link in the fuel efficiency DB 30a. The fuel efficiency in this example embodiment indicates the amount (unit: ml / km) of fuel consumed per unit of distance. Accordingly, the highest value of the fuel efficiency is the worst value Cₘₐₓ, and the lowest value of the fuel efficiency is the best value Cₘᵢₙ. For example, for the link (L1) in Table 1, the highest value (46) of the fuel efficiency is the worst value Cₘₐₓ, and the lowest value of the fuel efficiency (25) is the best value Cumin.

The first route related information providing portion 21b is a module for directing the control portion 20 to execute a function of providing information related to the first route searched for according to the first route search method. The first route search method is a method according to which, for links in which the deviation of the fuel efficiency is greater than a predetermined value, links with a better worst value of the fuel efficiency and a smaller deviation of the fuel efficiency have a greater tendency to be used as configuration links, and for links in which the deviation of the fuel efficiency is equal to or less than the predetermined value, links with a better average value of the fuel efficiency and a smaller deviation of the fuel efficiency have a greater tendency to be used as configuration links. When the first route is specified as the selected route type in the route request information transmitted from the navigation device 100, the control portion 20 uses the function of the first route related information providing portion 21b to obtain the departure point and the destination indicated in the route request information, and search for the first route from the departure point to the destination according to the first route search method. Using the function of the first route related information providing portion 21 b, the control portion 20 calculates a fuel efficiency deviation cost and a fuel efficiency cost for the first route search method based on the statistical value of the fuel efficiency stored in the fuel efficiency DB 30a.

Using the first route related information providing portion 21b, the control portion 20 calculates the fuel efficiency deviation cost and the fuel efficiency cost for the first route search method for each link based on the expressions shown in Table 2 below.

**[Table 2]**

| | | σ≤TH | σ>TH |
|---|---|---|---|
| First route search method | Fuel efficiency deviation cost | β+ασ | β+ασ |
| | Fuel efficiency cost | kCₐᵥₑ | kCₘₐₓ |
| Second route search method | Fuel efficiency deviation cost | β-ασ | β-ασ |
| | Fuel efficiency cost | kCₘᵢₙ | kCₘᵢₙ |

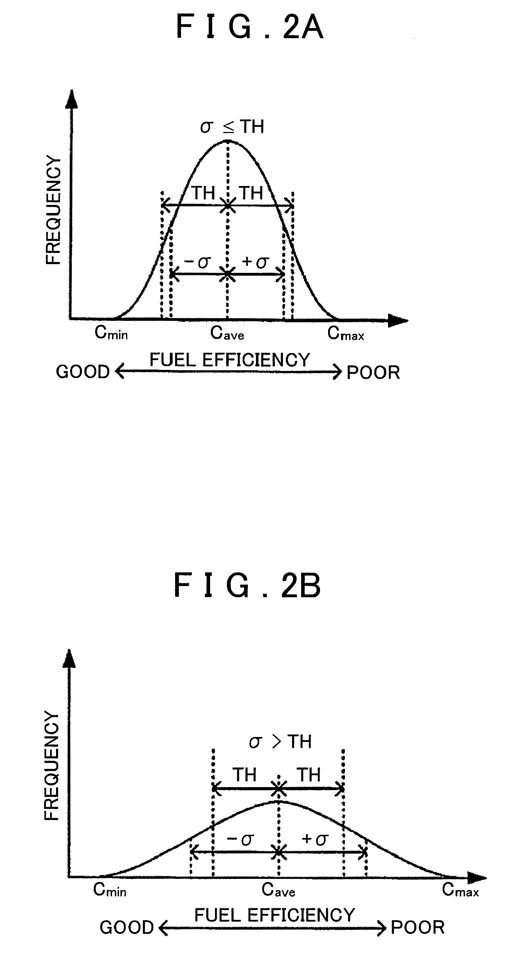

That is, the fuel efficiency deviation cost in the first route search method is a value that is obtained by adding a value obtained by multiplying the standard deviation σ for each link by a positive coefficient α to a positive bias constant β. The fuel efficiency deviation cost is a linear monotone increasing function for the standard deviation σ, and is always a positive value. FIGS. 2A and 2B are graphs showing a normal distribution curve in which a fuel efficiency histogram has been fitted. The vertical axis in FIGS. 2A and 2B represents the number of times (i.e., the frequency) with which the fuel efficiency is obtained, and the horizontal axis represents the fuel efficiency. As shown in FIG. 2A, for a link in which the standard deviation σ of the fuel efficiency is equal to or less than a predetermined value TH, a value that is obtained by multiplying the average value Cₐᵥₑ of the fuel efficiency if the vehicle were to travel the link by a positive coefficient k is set as the fuel efficiency cost in the first route search method. On the other hand, as shown in FIG 2B, for a link in which the standard deviation of the fuel efficiency is greater than the predetermined value TH, a value that is obtained by multiplying the worst value Cₘₐₓ of the fuel efficiency if the vehicle were to travel the link by the coefficient k is set as the fuel efficient cost. The fuel efficiency is always positive, so the fuel efficiency cost will also always be a positive value. The fuel efficiency cost corresponding to the amount of fuel that would be consumed if the vehicle were to travel the entire link may also be calculated for each link by calculating a value that is obtained by multiplying the average value Cₐᵥₑ or the worst value Cₘₐₓ of the fuel efficiency that indicates the amount of fuel consumed per unit of distance by the length of the link as the fuel efficiency cost.

Using the function of the first route related information providing portion 21 b, the control portion 20 searches for a first route that is a combination of a plurality of links that connect the departure point to the destination, using the Dijkstra method, A* algorithms, and advanced algorithms of these, and the like. At this time, using the function of the first route related information providing portion 21b, the control portion 20 calculates a link cost that is the sum of the fuel efficiency deviation cost, the fuel efficiency cost, and other costs (such as costs according to travel time and link length) for each link, and then searches for a combination of links that minimizes the total cost that is the sum of the link costs of the links as the first route. Using the function of the first route related information providing portion 21b, the control portion 20 creates route information specifying the configuration links that are the links that form the searched first route as information related to the first route.

Here, the fuel efficiency deviation cost in the first route search method is given by a monotone increasing function related to the standard deviation σ of the fuel efficiency. Therefore, an increase in the total cost due to the fuel efficiency deviation cost can be suppressed more with links having a smaller standard deviation σ of the fuel efficiency. That is, using the function of the first route related information providing portion 21b, the control portion 20 calculates the fuel efficiency deviation cost in which an increase is suppressed more with a smaller standard deviation σ of the fuel efficiency for each link, and searches for a first route that minimizes the total cost that includes the fuel efficiency deviation cost for each link. As a result, links with a smaller standard deviation σ of the fuel efficiency have a greater tendency to be used as configuration links of the first route. Furthermore, the fuel efficiency cost for links in which the standard deviation σ of the fuel efficiency is equal to or less than the predetermined value TH is proportionate to the average value Cₐᵥₑ of the fuel efficiency. Therefore, for links in which the standard deviation σ of the fuel efficiency is equal to or less than the predetermined value TH, links with a better (i.e., smaller) average value Cave of the fuel efficiency have a greater tendency to be used as configuration links of the first route. On the other hand, the fuel efficiency cost for links in which the standard deviation σ of the fuel efficiency is greater than the predetermined value TH is proportionate to the worst value Cₘₐₓ of the fuel efficiency. Therefore, for links in which the standard deviation σ of the fuel efficiency is greater than the predetermined value TH, links with a better (i.e., smaller) worst value Cₘₐₓ of the fuel efficiency have a greater tendency to be used as configuration links of the first route.

Furthermore, using the function of the first route related information providing portion 21 b, the control portion 20 transmits route information specifying the configuration links of the first route to the navigation device 100. That is, using the function of the first route related information providing portion 21b, the control portion 20 transmits route information specifying the configuration links of the first route to the navigation device 100 that had transmitted the route request information, so route guidance for the first route can be performed by the route guiding portion 210d of the navigation device 100.

The second route related information providing portion 21 c is a module for directing the control portion 20 to execute a function of providing information related to the second route searched according to the second route search method. The second route search method is a method according to which links with a better best value of the fuel efficiency and a larger deviation of the fuel efficiency have a greater tendency to be used as configuration links. Using the function of the second route related information providing portion 21 c, the control portion 20 obtains the departure point and destination indicated in the route request information and searches for a second route from the departure point to the destination when the second route is specified as the selected route type in the route request information transmitted from the navigation device 100. Using the function of the second route related information providing portion 21 c, the control portion 20 calculates the fuel efficiency deviation cost and the fuel efficiency cost for the second route search method based on a statistical value of the fuel efficiency stored in the fuel efficiency DB 30a.

Using the function of the second route related information providing portion 21c, the control portion 20 calculates the fuel efficiency deviation cost and the fuel efficiency cost for the second route search method for each link according to the expressions in Table 2 above. That is, the fuel efficiency deviation cost in the second route search method is a value that is obtained by subtracting a value obtained by multiplying the standard deviation σ of the fuel efficiency for each link by a coefficient α from a bias constant β. The fuel efficiency deviation cost is a linear monotone decreasing function for the standard deviation σ. The values of the coefficient α and the bias constant β are set such that the fuel efficiency deviation cost is always a positive value. The fuel efficiency cost in the second route search method is set to a value that is obtained by multiplying the best value Cₘᵢₙ of the fuel efficiency if the vehicle were to travel the link by a coefficient k, regardless of the standard deviation σ of the fuel efficiency. The fuel efficiency in this example embodiment indicates the amount of fuel consumed per unit of distance, so the lowest value of the fuel efficiency is the best value Cₘᵢₙ. The fuel efficiency cost corresponding to the amount of fuel that would be consumed if the vehicle were to travel the entire link may also be calculated for each link by calculating a value that is obtained by multiplying the best value Cₘᵢₙ of the fuel efficiency that indicates the amount of fuel consumed per unit of distance by the length of the link, as the fuel efficiency cost. The fuel efficiency cost in the second route search method is also always a positive value. Using the function of the second route related information providing portion 21c, the control portion 20 searches for a second route that is a combination of a plurality of links that connect the departure point to the destination, using the Dijkstra method, A* algorithms, and advanced algorithms of these, and the like that are used in the first route search method by the first route related information providing portion 21b. That is, the first route search method and the second route search method have different fuel efficiency deviation costs and fuel efficiency costs as contrasted in Table 2. Using the function of the second route related information providing portion 21c, the control portion 20 creates route information specifying the configuration links that are links that form the searched second route as information related to the second route.

Here, using the function of the second route related information providing portion 21c, the control portion 20 calculates the link cost that is the sum of the fuel efficiency deviation cost that is monotonically decreased for the standard deviation σ, the fuel efficiency cost that is proportionate to the best value Cₘᵢₙ of the fuel efficiency, and other costs, and then searches for a combination of links that minimizes the total cost that is the sum of the link costs of the links as the second route. That is, using the function of the second route related information providing portion 21c, the control portion 20 calculates, for each link, the fuel efficiency deviation cost in which an increase is suppressed as the standard deviation a of the fuel efficiency becomes larger, and searches for a second route that minimizes the total cost that includes the fuel efficiency deviation cost for each link. Therefore, links with a larger standard deviation σ of the fuel efficiency have a greater tendency to be used as configuration links of the second route. Moreover, the fuel efficiency cost is proportionate to the best value Cₘᵢₙ of the fuel efficiency, so links with a better (i.e., smaller) best value Cₘᵢₙ of the fuel efficiency have a greater tendency to be used as configuration links of the second route.

Using the function of the second route related information providing portion 21c, the control portion 20 transmits route information specifying the configuration links of the second route to the navigation device 100. That is, using the function of the second route related information providing portion 21c, the control portion 20 transmits route information specifying the configuration links of the second route to the navigation device 100 that had transmitted the route request information. As a result, route guidance for the second route can be performed by the route guiding portion 210d of the navigation device 100.

As described above, in this example embodiment, the control portion 20 is able to execute the functions of the first route related information providing portion 21 b and the second route related information providing portion 21 c. Using the function of the first route related information providing portion 21b, the control portion 20 provides information related to the first route searched for by the first route search method in which links with a smaller standard deviation σ of the fuel efficiency have a greater tendency to be used as configuration links. As a result, information related to the first route that is a route in which fuel efficiency relies little on driving performance for fuel saving driving by the driver can be provided to the driver. Therefore, information suited to a driver that pays little attention to driving performance can be provided to the driver. On the other hand, using the function of the second route related information providing portion 21 c, the control portion 20 provides information related to the second route searched for by the second route search method in which links with a larger deviation of the fuel efficiency have a greater tendency to be used as configuration links. As a result, information related to the second route that is a route in which fuel efficiency relies largely on the driving performance of the driver can be provided to the driver. Therefore, information suited to a driver that pays a great deal of attention to driving performance can be provided to the driver. As described above, information related to a route that corresponds to how conscious the driver is about driving performance can be provided by providing information related to the first route and the second route.

Also, using the function of the second route related information providing portion 21 c, the control portion 20 searches for the second route according to the second route search method in which links with a larger standard deviation a of the fuel efficiency and a better best value Cₘᵢₙ of the fuel efficiency have a greater tendency to be used as configuration links. As a result, a second route in which good fuel efficiency can be obtained if the driver pays attention to driving performance can be provided. The second route is a route in which fuel efficiency fluctuates greatly depending on driving performance, but if the best value of the fuel efficiency of the configuration links is good, good fuel efficiency can be obtained if the driver pays attention to driving performance. Therefore, the second route that is suited toward a driver that wishes to feel a sense of achievement when good fuel efficiency is obtained as a result of paying attention to driving performance can be provided.

On the other hand, using the function of the first route related information providing portion 21b, the control portion 20 searches for the first route according to the first route search method. In the first route search method, for links in which the standard deviation σ of the fuel efficiency is greater than the predetermined value TH, links with a better worst value Cₘₐₓ and a smaller standard deviation σ of the fuel efficiency have a greater tendency to be used as configuration links of the first route, and for links in which the standard deviation σ of the fuel efficiency is equal to or less than the predetermined value TH, links with a better average value Cₐᵥₑ of the fuel efficiency and a smaller standard deviation σ of the fuel efficiency have a greater tendency to be used as configuration links of the first route. When a vehicle travels on link in which the standard deviation σ of the fuel efficiency is greater than the predetermined value TH, the fuel efficiency may fluctuate greatly depending on the driving performance, but it is unlikely that the fuel efficiency will deteriorate much even if the fuel efficiency fluctuates more with a better worst value Cₘₐₓ of the fuel efficiency for this link. That is, even if a link in which the standard deviation σ of the fuel efficiency is greater than the predetermined value TH is used as a configuration link of the first route, the fuel efficiency can be suppressed from greatly deteriorating. Therefore, a first route that is suited toward a driver that wants to realize good fuel efficiency effortlessly without paying attention to driving performance can be searched for. On the other hand, when the vehicle is traveling a link in which the standard deviation σ of the fuel efficiency is equal to or less than the predetermined value TH, it is unlikely that the fuel efficiency will fluctuate much from the average value Cₐᵥₑ depending on the driving performance, so it can be estimated that the actual fuel efficiency will be a value that is close to the average value Cₐᵥₑ. Therefore, the first route can be searched for based on the average value Cₐᵥₑ of the fuel efficiency near the actual fuel efficiency.

### (1-3) Route guidance routine:

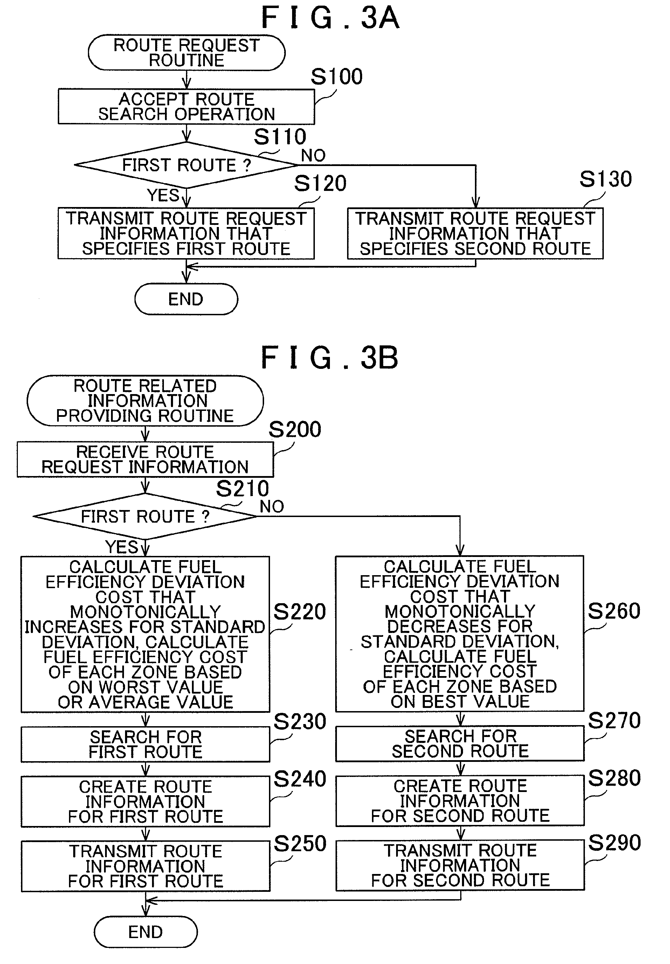

FIG. 3A is a flowchart of a route request routine executed by the navigation device 100. In step S100, using the function of the route requesting portion 210b, the control portion 200 accepts a route search operation of a driver via the UI portion 440. Here, the selection of the route type and the specification of the destination are accepted according to the route search operation. For example, the UI portion 440 outputs a message such as, "Please select First Route if you wish a route that enables good fuel efficiency to be obtained effortlessly." or "Please select Second Route if you wish a route that enables good fuel efficiency to be obtained depending on driving performance." or the like. In step S110, using the function of the route requesting portion 210b, the control portion 200 determines whether the first route is selected as the route type. If it is determined that the first route is selected, the control portion 200 transmits route request information specifying the first route as the selected route type to the server 10 in step S120 using the function of the route requesting portion 210b. If, on the other hand, it is determined that the second route is selected, the control portion 200 transmits route request information specifying the second route as the selected route type to the server 10 in step S130 using the function of the route requesting portion 210b. Then this cycle of the route request routine ends.

FIG 3B is a flowchart illustrating a route related information providing routine executed by the server 10 in response to the route request information. At the time that the route related information providing routine is executed, the control portion 20 obtains a plurality of fuel efficiency information transmitted from multiple vehicles using the function of the fuel efficiency obtaining portion 21a, and this plurality of fuel efficiency information is accumulated in the fuel efficiency DB 30a. In step S200, the control portion 20 receives the route request information from the navigation device 100 using the function of the route related information providing program 21. In step S210, the control portion 20 determines whether the first route is specified as the selected route type in the route request information using the function of the route related information providing program 21.

If it is determined that the first route is specified as the selected route type in the route request information, then in step S220, the control portion 20 calculates the fuel efficiency deviation cost and the fuel efficiency cost for each link based on the statistical value of the fuel efficiency stored in the fuel efficiency DB 30a according to the expressions in Table 2 described above using the function of the first route related information providing portion 21b. That is, the control portion 20 calculates a value that is obtained by adding a value obtained by multiplying the standard deviation σ of the fuel efficiency of each link by the coefficient α to the bias constant β, as the fuel efficiency deviation cost using the function of the first route related information providing portion 21b. Furthermore, for links in which the standard deviation σ of the fuel efficiency is equal to or less than the predetermined value TH, the control portion 20 calculates a value that is obtained by multiplying the average value Cave of the fuel efficiency by the coefficient k as the fuel efficiency cost using the function of the first route related information providing portion 21b, and for links in which the standard deviation σ of the fuel efficiency is greater than the predetermined value TH, the control portion 20 calculates a value that is obtained by multiplying the worst value Cₘₐₓ of the fuel efficiency by the coefficient k as the fuel efficiency cost using the function of the first route related information providing portion 21b. Moreover, using the function of the first route related information providing portion 21b, the control portion 20 obtains other costs corresponding to the travel time and the lengths of the links from the map information 30b. In this example embodiment, the predetermined value TH corresponds to the standard deviation σ of the fuel efficiency in zones where the road shape, e.g., hilly and curvy, is average. Therefore, for zones that have more hills and curves than average, the fuel efficiency cost based on the worst value Cₘₐₓ of the fuel efficiency is calculated, and for zones that have fewer hills and curves than average, the fuel efficiency cost based on the average value Cave of the fuel efficiency is calculated.

In step S230, using the function of the first route related information providing portion 21b, the control portion 20 calculates the link cost that is the sum of the fuel efficiency deviation cost that is monotonically increased for the standard deviation σ of the fuel efficiency, the fuel efficiency cost that is proportionate to the average value Cave or the worst value Cₘₐₓ of the fuel efficiency, and the other costs, for each link. Then, using the first route related information providing portion 21b, the control portion 20 searches for a combination of links that minimizes the total cost that is the sum of the link costs, that is a combination of links that connect the departure point to the destination indicated in the route request information, as a first route. The first route is a route that minimizes the total cost that is the sum of the link costs of the links, including the fuel efficiency deviation cost that monotonically increases with respect to the standard deviation σ of the fuel efficiency. Therefore, links with a smaller standard deviation σ of the fuel efficiency have a greater tendency to be used as configuration links of the first route. In step S240, the control portion 20 creates route information specifying the configuration links of the searched first route using the function of the first route related information providing portion 21b.

In step S250, using the function of the first route related information providing portion 21b, the control portion 20 transmits the route information that specifies the configuration links of the first route to the navigation device 100 that had requested a route. As a result, route information that specifies the configuration links of the first route specified in the route request information is obtained by the navigation device 100, and route guidance for the first route is performed by the navigation device 100 based on this route information. Therefore, a driver that wishes to effortlessly achieve good fuel efficiency is able to drive the vehicle along the first route in which links with a smaller standard deviation σ of the fuel efficiency have a greater tendency to be used as configuration links. As a result, good fuel efficiency is able to be realized without the driver paying attention to driving performance.

On the other hand, if it is determined in step S210 that the first route is not specified as the route type in the route request information, then in step S260, the control portion 20 calculates the fuel efficiency deviation cost and the fuel efficiency cost for each link based on the statistical value of the fuel efficiency stored in the fuel efficiency DB 30a according to the expressions in Table 2 above, using the function of the second route related information providing portion 21c. That is, the fuel efficiency deviation cost in the second route search method is a value that is obtained by subtracting a value obtained by multiplying the standard deviation σ of the fuel efficiency in each link by the coefficient α from the bias constant β. The fuel efficiency cost in the second route search method is a value that is obtained by multiplying the best value Cₘᵢₙ of the fuel efficiency by the coefficient k.

In step S270, using the function of the second route related information providing portion 21c, the control portion 20 calculates, for each link, the link cost that is the sum of the fuel efficiency deviation cost that is monotonically decreased for the standard deviation a of the fuel efficiency, the fuel efficiency cost that is proportionate to the best value Cₘᵢₙ of the fuel efficiency, and the other costs. Then, using the function of the second route related information providing portion 21c, the control portion 20 searches for a combination of links that minimizes the total cost that is the sum of the link costs, that is a combination of links that connect the departure point to the destination indicated in the route request information, as the second route. The second route is a route that minimizes the total cost that is the sum of the link costs of the links, including the fuel efficiency deviation cost that monotonically decreases with respect to the standard deviation σ of the fuel efficiency. Therefore, links with a larger standard deviation σ of the fuel efficiency have a greater tendency to be used as configuration links of the second route. In step S280, the control portion 20 creates route information specifying the configuration links of the searched second route using the function of the second route related information providing portion 21c.

In step S290, using the function of the second route related information providing portion 21c, the control portion 20 transmits the route information that specifies the configuration links of the second route to the navigation device 100 that had requested a route. As a result, route information that specifies the configuration links of the second route specified as the selected route type in the route request information is obtained by the navigation device 100, and route guidance for the second route is performed by the navigation device 100 based on this route information. Therefore, a driver that has confidence in his or her driving performance is able to drive the vehicle along the second route in which links with a larger standard deviation σ of the fuel efficiency have a greater tendency to be used as configuration links, thus enabling the driver to feel a sense of achievement about improving the fuel efficiency in response to driving performance.

### (2) Other example embodiments:

Using the functions of the first route related information providing portion 21 b and the second route related information providing portion 21c, the control portion 20 may also provide both information related to the first route and information related to the second route. For example, a selection of the route type in a route search operation of the example embodiment may not be accepted beforehand, and the control portion 20 may search for a first route and a second route from the departure point to the destination using the functions of the first route related information providing portion 21 b and the second route related information providing portion 21 c, respectively, and both route information of the first route and route information of the second route may be provided. Furthermore, the control portion 20 may also transmit both the route information of the first route and the route information of the second route to the navigation device 100.

In this case, additional information indicative of the estimated fuel efficiency, the driving distance, and the required time and the like when the vehicle travels the entire first route or the second route, or a configuration link of the first route or the second route, may be added to the route information of the first route or the route information of the second route. For example, the estimated fuel efficiency of the entire first route may be the sum of the products of the average value Cave of the fuel efficiency and the length of the configuration link of the first route, or it may be the sum of the products of the worst value Cₘₐₓ of the fuel efficiency and the length of the configuration link of the first route. The former estimated fuel efficiency enables the driver to ascertain the fuel efficiency that can be obtained with average driving performance, and the latter estimated fuel efficiency enables the driver to ascertain the fuel efficiency that can be obtained at the very worst. Also, the estimated fuel efficiency calculated by switching between the worst value Cₘₐₓ and the average value Cₐᵥₑ multiplied by the length of the configuration link depending on whether the standard deviation σ of the fuel efficiency of the configuration link is greater than the predetermined value TH may be set as the estimated fuel efficiency for the entire first route. On the other hand, the estimated fuel efficiency for the entire second route may be set as the sum of the products of the average value Cave of the fuel efficiency and the length of the configuration link of the second route, or as the sum of the products of the best value Cₘᵢₙ and the length of the configuration link of the second route. The latter estimated fuel efficiency enables the driver to ascertain a target fuel efficiency of the second route.

Using the function of the route related information obtaining portion 210c in the navigation device 100, the control portion 200 receives the route information specifying the configuration links of the first route and the second route, and the additional information added to the route information. The navigation device 100 as a accepting unit shows the estimated fuel efficiency, the driving time, and the required time for the first route and the second route on the UI portion 440 based on the additional information, and accepts a selection one of the first route and the second route. Accordingly, the driver is able to compare the estimated fuel efficiencies, the driving times, and the required times for the first route and the second route. For example, if the estimated fuel efficiency that is the sum of the products of the best value Cₘᵢₙ of the fuel efficiency and the length of the configuration link of the second route shows a better fuel efficiency than the estimated fuel efficiency that is the sum of the products of the average value Cave of the fuel efficiency and the length of the configuration link of the first route, a driver who has confidence in his or her driving can select the second route in order to achieve even better fuel efficiency. Conversely, if the estimated fuel efficiency that is the sum of the products of the average value Cave of the fuel efficiency and the length of the configuration link of the first route shows a better fuel efficiency than the estimated fuel efficiency that is the sum of the products of the best value Cₘᵢₙ of the fuel efficiency and the length of the configuration link of the second route, the driver is able to recognize that there is no advantage to selecting the second route. Finally, using the function of the route guiding portion 210d, the control portion 200 is able to perform guidance for the first route or the second route with the UI portion 440 based on the route information for the selected route.

In this example embodiment, the selection of the first route and the second route is left to the driver, but one of the first route and the second route may also be selected as the route to be introduced based on the first route and the second route searched for by the navigation device 100 or the server 10. For example, if the estimated fuel efficiency that is the sum of the products of the average value Cave of the fuel efficiency and the length of the configuration link of the first route shows a better fuel efficiency than the estimated fuel efficiency that is the sum of the products of the best value Cₘᵢₙ of the fuel efficiency and the length of the configuration link of the second route, it may be determined that there is no advantage to introducing the second route, so the first route may be introduced. Moreover, using the function of one of the first route related information providing portion 21b and the second route related information providing portion 21c, the control portion 20 may first calculate an estimated fuel efficiency and the like for one of the first route and the second route, and if the driver is not satisfied with this estimated fuel efficiency and the like, for example, a search for the other of the first route and the second route may be performed.

Additional information indicative of the estimated fuel efficiency and the like if the vehicle were to travel the first route and the second route may be added to the route information specifying the configuration links of the first route and the second route, and then transmitted to the navigation device 100, or the additional information indicative of the estimated fuel efficiency and the like if the vehicle were to travel the first route and the second route and the route information may be transmitted separately. That is, first, information indicative of the estimated fuel efficiency and the like if the vehicle were to travel the first route and the second route may be transmitted to the navigation device 100, and then route information specifying the configuration links of the first route or the second route selected based on this information may be transmitted to the navigation device 100. As a result, the route information specifying the configuration links of both the first route and the second route do not have to be transmitted to the navigation device 100, so the amount of communication can be minimized.

In this example embodiment, fuel efficiency information obtained from a plurality of vehicles is accumulated in the server 10, but fuel efficiency information may also be accumulated in the navigation device 100 provided in the vehicle. In this case, only the fuel efficiency for the vehicle provided with the navigation device 100 may be accumulated, or fuel efficiency information obtained via communication with other vehicles may also be accumulated. If fuel efficiency information is accumulated in the navigation device 100, and furthermore, the functions of the first route related information providing portion 21b and the second route related information providing portion 21 are executed by the navigation device 100, the first route and the second route can be searched for in the navigation device 100, which enables communication with the server 10 to be omitted.

The fuel efficiency deviation may be obtained based on various statistical indexes. For example, the fuel efficiency deviation may be obtained based on a fuel efficiency variance, a half-value width, or a width of the range from the lowest value to the highest value of the fuel efficiency or the like. Here, the threshold value (a predetermined value) related to the deviation of the fuel efficiency may be the average value of the deviation of the fuel efficiency over all of the zones, or the deviation of the fuel efficiency in a zone where the road shape, e.g., hilly and curvy, is average. Furthermore, the best value Cₘᵢₙ of the fuel efficiency used to calculate the fuel efficiency cost in the second route search method may be considered a fuel efficiency that is possible to obtain if the driver is paying very close attention to driving performance. The fuel efficiency cost in the second route search method may also be calculated using a value that is obtained by subtracting 3σ from the average value Cave, as a fuel efficiency that is possible to obtain if the driver is paying very close attention to driving performance. Similarly, the fuel efficiency cost in the first route search method may be calculated using a value that is obtained by adding 3σ to the average value Cₐᵥₑ of the fuel efficiency instead of the worst value Cₘₐₓ of the fuel efficiency, as a fuel efficiency that is possible to obtain if the driver is not paying very much attention at all to driving performance, for example. Also, the average value Cₐᵥₑ calculated as the fuel efficiency cost in the first route search method may be an arithmetic average or a geometric average, and the fuel efficiency cost based on a median value or a mode instead of the average value Cₐᵥₑ may be calculated.

Moreover, in the example embodiment described above, the route search is performed taking both the fuel efficiency deviation cost and the fuel efficiency cost into account. However, as long as a route search is performed taking at least the fuel efficiency deviation cost into account, it is possible to search for a first route in which links with a smaller standard deviation σ of the fuel efficiency have a greater tendency to be used as configuration links, and a second route in which links with a larger standard deviation σ of the fuel efficiency have a greater tendency to be used as configuration links. That is, using the function of the first route related information providing portion 21b, the control portion 20 calculates, for each link, a link cost to which at least the fuel efficiency deviation cost that monotonically increases for the standard deviation σ of the fuel efficiency has been added. Then, using the function of the first route related information providing portion 21b, the control portion 20 searches for a combination of links that minimizes the total cost that is the sum of the link costs, that is a combination of links that connect the departure point to the destination indicated in the route request information. As a result, links with a smaller standard deviation σ of the fuel efficiency have a greater tendency to be used as the configuration links of the first route, so information related to the first route in which fuel efficiency does not rely much on the driving performance of the driver can be provided. On the other hand, using the function of the second route related information providing portion 21c, the control portion 20 calculates, for each link, a link cost to which at least the fuel efficiency deviation cost that monotonically decreases for the standard deviation σ of the fuel efficiency has been added. Then, using the function of the second route related information providing portion 21c, the control portion 20 searches for a combination of links that minimizes the total cost that is the sum of the link costs, that is a combination of links that connect the departure point to the destination indicated in the route request information. As a result, links with a larger standard deviation σ of the fuel efficiency have a greater tendency to be used as the configuration links of the second route, so information related to the second route in which fuel efficiency relies greatly on the driving performance of the driver can be provided.

Furthermore, information related to the first route searched for according to the first route search method as described in the example embodiment above may be provided only when the deviation of the fuel efficiency of the entire first route is equal to or less than a predetermined value. For example, when the deviation of the fuel efficiency of the entire first route searched for according to the first route search method is not equal to or less than the predetermined value, a first route in which the deviation of the fuel efficiency of the entire route is equal to or less than the predetermined value may be obtained by repeating a process of increasing the contribution amount of the fuel efficiency deviation cost in the link cost and searching for the first route. Similarly, information related to the second route searched for according to the second route search method may be provided only when the deviation of the fuel efficiency of the entire second route is greater than a predetermined value. For example, when the deviation of the fuel efficiency of the entire second route is not greater than the predetermined value, a second route in which the deviation of the fuel efficiency of the entire route is greater than the predetermined value may be obtained by repeating a process of increasing the contribution amount of the fuel efficiency deviation cost in the link cost and searching for the second route. The deviation of the fuel efficiency of the entire route is able to be ascertained based on the total value or the average value or the like of the standard deviation σ of the fuel efficiency of each configuration link, for example. Also, when calculating the total value or the average value or the like of the standard deviation σ of the fuel efficiency of each configuration link, the standard deviation σ of the fuel efficiency may be weighted according to the length of each configuration link. Accordingly, the contribution amount corresponding to the length of each configuration link can be reflected in the deviation of the fuel efficiency of the entire route.

In the example embodiment described above, the statistical values of the fuel efficiency used to calculate the fuel efficiency deviation cost and the fuel efficiency cost are stored in the fuel efficiency DB 30a in advance, but these statistical values may also be calculated in the route related information providing routine. That is, in the route related information providing routine, the control portion 20 specifies the statistical values necessary to calculate the fuel efficiency deviation cost and the fuel efficiency cost referencing Table 2 described above, using the functions of the first route related information providing portion 21b and the second route related information providing portion 21 c. Then using the functions of the first route related information providing portion 21b and the second route related information providing portion 21 c, the control portion 20 may calculate the fuel efficiency deviation cost and the fuel efficiency cost by obtaining the fuel efficiency information stored in the fuel efficiency DB 30a, calculating the necessary statistical values, and performing calculations according to the expressions in Table 2 above based on these statistical values.

A plurality of fuel efficiency information need only be obtained for each of a plurality of zones. Fuel efficiency information for each time a single vehicle travels one zone, when the vehicle travels the zone a plurality of times, may be obtained, or fuel efficiency information for each time a plurality of vehicles travel one zone, when the vehicles travel the zone one or a plurality of times, may be obtained. Also, a plurality of fuel efficiency information may be obtained from a vehicle, or a plurality of fuel efficiency information may be obtained from a database. The fuel efficiency may be an index indicating the amount of fuel consumed as the vehicle travels. For example, the fuel efficiency may be an index indicating the amount of fuel consumed when the vehicle travels a unit of distance, or the amount of fuel consumed when the vehicle travels an entire zone. In these cases, a smaller fuel efficiency value indicates better fuel efficiency, and a larger fuel efficiency value indicates poorer fuel efficiency. Furthermore, the fuel efficiency may be the distance that the vehicle is able to travel when a unit amount of fuel is consumed. In this case, a larger fuel efficiency value indicates better fuel efficiency and a smaller fuel efficiency value indicates poorer fuel efficiency. Therefore, a good best value of the fuel efficiency means that the lowest value of the amount of fuel consumed when the vehicle travels a zone is small, when the amount of fuel consumed when the vehicle travels a unit of distance is used as the fuel efficiency, for example. Also, a good worst value of the fuel efficiency means that the highest value of the amount of fuel consumed when the vehicle travels a zone is small, when the amount of fuel consumed when the vehicle travels a unit of distance is used as the fuel efficiency, for example. An apparatus that serves as the route related information providing apparatus may be provided in a vehicle, or may be provided outside of a vehicle, such as in a traffic information control center or the like. In the latter case, fuel efficiency information is obtained from the vehicle via a predetermined communication link. Also, when an apparatus that serves as the route related information providing apparatus is provided in a vehicle, fuel efficiency information may also be obtained from another vehicle via a predetermined communication link.

Both the information related to the first route and the information related to the second route may be provided. As a result, the driver is able to select a more appropriate route by comparing the information related to the first route and the information related to the second route. Also, one of the first route and the second route may be selected beforehand and the information related to the selected route may be provided. Furthermore, one of the information related to the first route and the information related to the second route may be provided first, and if the driver is not satisfied with the information, for example, the other of the information related to the first route and the information related to the second route may be provided.

Providing information related to the first route and information related to the second route may be outputting the information by a display device or an audio output device connected to an apparatus that serves as the route related information providing apparatus, or transmitting the information to a navigation device or the like that is connected via a communication link to an apparatus that serves as the route related information providing apparatus. The information related to the first route and the information related to the second route may include route information that specifies each configuration zone of the first route and the second route, or may include information indicative of the required time, the driving distance, the fuel efficiency, and the deviation of the fuel efficiency and the like if the vehicle were to travel the configuration zones of all or some of the first route and the second route. Providing route information that specifies the configuration zones of the first route and the second route enables the driver to drive the vehicle on the first route and the second route based on the route information. Providing information indicative of the required time, the driving distance, the fuel efficiency, and the deviation of the fuel efficiency and the like if the vehicle were to travel the configuration zones of all or some of the first route and the second route enables the driver to have a guideline for selecting one of the first route and the second route as the route to be driven.

The route related information providing apparatus, the method for providing route related information, and the computer-readable storage medium to which the practice of the present invention has been applied may be realized as a singular apparatus or as a plurality of apparatuses. Also, various modifications, as appropriate, are also possible. For example, part may be formed by software and part may be formed by hardware. Of course, the storage medium of this software may be a magnetic storage medium or a magneto-optical storage medium, or any kind of storage medium that has yet to be developed.
A route related information providing apparatus comprises a fuel efficiency information obtaining unit obtaining, for a plurality of zones, a plurality of fuel efficiency information indicative of a zone associated with a fuel efficiency, a first route related information providing unit providing information related to a first route searched for according to a firs route search method, according to which a zone with a smaller deviation of the fuel efficiency indicated in the fuel efficiency information has a greater tendency to be used as configuration zone of the first route, and a second route related information providing unit providing information related to a second route searched for according to a second route search method, according to which a zone with a larger deviation of the fuel efficiency indicated in the fuel efficiency information has a greater tendency to be used as configuration zone of the second route.

## Claims

1. A route related information providing apparatus comprising:
a fuel efficiency information obtaining unit that obtains a plurality of fuel efficiency information indicative of a zone associated with a fuel efficiency if a vehicle were to travel the zone, for each of a plurality of zones;
a first route related information providing unit that provides information related to a first route searched for according to a first route search method, wherein the first route search method is a method according to which a zone with a smaller deviation of the fuel efficiency indicated in the fuel efficiency information has a greater tendency to be used as a configuration zone of the first route; and
a second route related information providing unit that provides information related to a second route searched for according to a second route search method, wherein the second route search method is a method according to which a zone with a larger deviation of the fuel efficiency indicated in the fuel efficiency information has a greater tendency to be used as a configuration zone of the second route.

2. The route related information providing apparatus according to claim 1, wherein the second route search method is a method according to which a zone with a better best value of the fuel efficiency indicated in the fuel efficiency information and a larger deviation of the fuel efficiency indicated in the fuel efficiency information has a greater tendency to be used as the configuration zone of the second route.

3. The route related information providing apparatus according to claim 1, wherein the first route search method is a method according to which, for a zone in which the deviation of the fuel efficiency indicated in the fuel efficiency information is greater than a predetermined value, a zone with a better worst value of the fuel efficiency indicated in the fuel efficiency information and a smaller deviation of the fuel efficiency indicated in the fuel efficiency information has a greater tendency to be used as the configuration zone of the first route, and for a zone in which the deviation of the fuel efficiency indicated in the fuel efficiency information is equal to or less than the predetermined value, a zone with a better average value of the fuel efficiency indicated in the fuel efficiency information and a smaller deviation of the fuel efficiency indicated in the fuel efficiency information has a greater tendency to be used as the configuration zone of the first route.

4. A method for providing route related information, comprising:
obtaining a plurality of fuel efficiency information indicative of a zone associated with a fuel efficiency if a vehicle were to travel the zone, for each of a plurality of zones; and
providing at least one of information related to a first route searched for according to a first route search method, and information related to a second route searched for according to a second route search method, wherein the first route search method is a method according to which a zone with a smaller deviation of the fuel efficiency indicated in the fuel efficiency information has a greater tendency to be used as a configuration zone of the first route, and the second route search method is a method according to which a zone with a larger deviation of the fuel efficiency indicated in the fuel efficiency information has a greater tendency to be used as a configuration zone of the second route.

5. A computer-readable storage medium that stores computer-executable instructions for performing a route related information providing function comprising:
obtaining a plurality of fuel efficiency information indicative of a zone associated with a fuel efficiency if a vehicle were to travel the zone, for each of a plurality of zones;
providing information related to a first route searched for according to a first route search method, wherein the first route search method is a method according to which a zone with a smaller deviation of the fuel efficiency indicated in the fuel efficiency information has a greater tendency to be used as a configuration zone of the first route; and
providing information related to a second route searched for according to a second route search method, wherein the second route search method is a method according to which a zone with a larger deviation of the fuel efficiency indicated in the fuel efficiency information has greater tendency to be used as a configuration zone of the second route.

6. A route guidance system comprising:
the route related information providing apparatus according to claim 1; and
a navigation device configured to communicate with the route related information providing apparatus,
wherein the navigation device includes a route information obtaining unit that obtains information related to the first route and the second route from the route related information providing apparatus, a accepting unit that provides information related to the first route and the second route and accepts a selection of one of the first route and the second route, and a route guidance unit that performs route guidance for the selected first route or the second route.
